# EUROPÄISCHE PATENTSCHRIFT

(11) **EP 1 409 882 B1**
(45) Veröffentlichungstag und Bekanntmachung des Hinweises auf die Patenterteilung: **10.01.2007**
(21) Anmeldenummer: 02754368.5
(22) Anmeldetag: 16.07.2002
(51) Int. Cl.: F16C 11/06

(54) **KUGELGELENK**
BALL AND SOCKET JOINT
JOINT A ROTULE

(30) Priorität: 25.07.2001 DE 10135386
(43) Veröffentlichungstag der Anmeldung: 21.04.2004
(73) Patentinhaber: ZF Lemförder Metallwaren AG, 49441 Lemförde (DE)
(72) Erfinder: HEUSER, Frank, 27801 Neerstedt (DE); BUDDE, Frank, 49401 Damme (DE)
(86) Internationale Anmeldenummer: PCT/DE2002/002600
(87) Internationale Veröffentlichungsnummer: WO 2003/016731

(56) Entgegenhaltungen:
- EP-A- 0 900 677
- DE-A- 1 947 236
- DE-A- 4 108 219
- DE-U- 29 722 507
- US-A- 5 092 703

## Beschreibung

Die Erfindung betrifft ein Kugelgelenk für ein Kraftfahrzeug, insbesondere für das Fahrwerk des Kraftfahrzeugs, mit einem mit einer Gelenköffnung versehenen Kugelgelenkgehäuse, einer in diesem angeordneten Lagerschale, einem aus einer Gelenkkugel und einem Zapfen bestehenden Kugelzapfen, welcher mit seiner Gelenkkugel drehbar und schwenkbar in der Lagerschale gelagert ist und mit seinem Zapfen durch die Lagerschale und die Gelenköffnung hindurch aus dem Kugelgelenkgehäuse herausragt.

Ein derartiges Kugelgelenk ist aus der DE 297 22 507 U1 bekannt, wobei die Lagerschale aus einem mit Fasern verstärkten Kunststoff hergestellt ist. Mit Fasern verstärkte Kunststoffe weisen gegenüber demselben Kunststoff, der nicht mit Fasern verstärkt ist, eine deutlich höhere Festigkeit auf. Diese deutlich höhere Festigkeit ist auch erwünscht, um die Lebensdauer von Kugelgelenken zu erhöhen. Problematisch sind jedoch die bei mit Fasern verstärkten Kunststoffen an der Oberfläche herausragenden Enden der Fasern, die unter anderem die Oberfläche der Gelenkkugel angreifen und eine erhöhte Reibung zwischen Gelenkkugel und Lagerschale hervorrufen.

Aus der ein Kugelgelenk zum Einbau in eine Antriebsvorrichtung für Scheibenwischeranlagen offenbarenden DE 199 32 789 A1 ist bekannt, eine Lagerschale aus Polyamid mit 30% Glasfaser-Anteil und 6% Graphit herzustellen. Durch das Verwenden einer Lagerschale aus einem graphitgeschmierten Thermoplast, dessen Anwendung in Wasserumgebungen bekannt ist, wurde die Reibung verringert und der Verschleiß an der Oberfläche der Gelenkkugel reduziert. Dennoch sind der Verschleiß und die Reibung bei diesem Kugelgelenk zu hoch, wenn es zum Beispiel im Fahrwerk eines Kraftfahrzeugs eingesetzt werden soll. Ferner ist eine Wasserumgebung im Innern eines im Fahrwerk einzusetzendes Kugelgelenks unerwünscht.

Aus der DE 41 08 219 A 1 ist weiterhin eine Lagerschale aus Kunststoff für Kugelgelenke in Kraftfahrzeugen bekannt, die aus einem Faserverbundwerkstoff besteht. Die an der Gelenkkugel anliegende Gleitoberfläche der Lagerschale wird dabei durch ein von Kunststoff ummanteltes Fasergeflecht gebildet.

Aufgabe der Erfindung ist es, ein Kugelgelenk für ein Kraftfahrzeug mit einer aus mit Fasern verstärktem Kunststoff hergestellten Lagerschale zu schaffen, wobei unter Ausschluss von Feuchtigkeit die Reibung zwischen der Gelenkkugel und der Lagerschale sowie der Verschleiß an der Gelenkkugeloberfläche weiter reduziert werden.

Diese Aufgabe wird durch ein Kugelgelenk mit den Merkmalen nach Patentanspruch 1 gelöst. Bevorzugte Weiterbildungen sind in den Unteransprüchen beschrieben.

Erfindungsgemäß wird ein Kugelgelenk für ein Kraftfahrzeug, insbesondere für das Fahrwerk des Kraftfahrzeugs mit einem mit einer Gelenköffnung versehenen Kugelgelenkgehäuse geschaffen, in dem eine Lagerschale angeordnet ist; das Kugelgelenk weist einen Kugelzapfen auf, der aus einem Zapfen und einer Gelenkkugel besteht und mit seiner Gelenkkugel drehbar und schwenkbar in der Lagerschale gelagert ist, wobei sich der Zapfen durch die Lagerschale und die Gelenköffnung hindurch aus dem Kugelgelenkgehäuse hinaus erstreckt; die Lagerschale ist zumindest teilweise aus einem mit einem reibmodifizierenden, anti-adhäsiven Material versetzten und mit Fasern verstärkten Kunststoff hergestellt, siehe DE-A-4108219 oder DE-U-29722507.

Durch das Hinzufügen des reibmodifizierenden, anti-adhäsiven Materials zu dem mit Fasern verstärkten Kunststoff werden die Reibung zwischen der Lagerschale und der Gelenkkugel und der Verschleiß an der Oberfläche der Gelenkkugel erheblich reduziert. Das anti-adhäsive Material weist aufgrund seiner anti-adhäsiven Eigenschaft nicht nur eine schmierende Wirkung auf, sondern dient gleichzeitig als Abstandshalter zwischen den aus der Oberfläche des Kunststoffs herausragenden Enden der Fasern und der Gelenkkugel. Hierdurch werden ein deutlich kleinerer Reibungskoeffizient und ein geringerer Verschleißfaktor als bei den mit Graphit geschmierten, faserverstärkten Kunststoffen erzielt, denn anders als das Graphit, das aufgrund seiner Schichtgitterstruktur ein Schmieren dadurch herbeiführt, das unter Zerstörung eines Graphitteilchens unterschiedliche Schichten der Schichtgitterstruktur relativ zueinander gleiten, basiert die schmierende Wirkung eines anti-adhäsiven Materials nicht auf Volumen- sondern auf Oberflächeneigenschaften, so dass die schmierende Wirkung auch ohne die Zerstörung von anti-adhäsiven Materialteilchen erzielt werden kann, welche somit gleichzeitig als Abstandshalter und als Schmiermittel dienen können.

Je nach Einsatzgebiet eines mit einer Lagerschale versehenen Kugelgelenks sind die örtlichen Belastungen der Lagerschale unterschiedlich, so dass bei dem erfindungsgemäßen Kugelgelenk insbesondere die Bereiche der Lagerschale, auf die im Betrieb des erfindungsgemäßen Kugelgelenks die größten Drücke ausgeübt werden, aus dem mit einem anti-adhäsiven Material versetzten Kunststoff gefertigt sind.

Das anti-adhäsive Material kann zum Beispiel unter Verwendung von Halogenen hergestellt werden. Diese können aufgrund ihrer hohen Valenzelektronendichte die gewünschte anti-adhäsive Eigenschaft begünstigen. Insbesondere haben sich Fluor-Verbindungen, wie zum Beispiel PFA (Perflouralkoxy-Copolymerisat) oder PTFE (Polytetraflourethylen) bewährt. Nach einer bevorzugten Ausführungsform wird aber PTFE als anti-adhäsives Material verwendet, da es einen der niedrigsten Reibkoeffizienten aufweist.

Als Kunststoffmaterialien für die Lagerschale können zum Beispiel PEEK (Polyetheretherketon), PES (Polyethersulfon), PSU (Polysulfon), PEI (Polyetherimid) oder PPS (Polyphenylensulfid) verwendet werden, wobei alle diese Materialien eine hohe Festigkeit aufweisen. Nach einer bevorzugten Ausführungsform wird aber Polyamid als Kunststoffmaterial verwendet, welches ein bei Anforderungen an die Festigkeit bekannter und gleichzeitig kostengünstiger Werkstoff ist.

Als Fasern können zum Beispiel die besonders leichten Kohlenstoff-Fasern oder die eine gute Schmierwirkung aufweisenden Aramid-Fasern verwendet werden. Bevorzugt werden aber Glasfasern zum Verstärken des Kunststoffes verwendet, da mit diesen eine relativ große Versteifung des Kunststoffmaterials bei geringen Kosten erzielt werden kann.

Der verwendete faserverstärkte Kunststoff weist zwar eine höhere Festigkeit aber auch eine höhere Sprödigkeit auf. Nach einer Weiterbildung des erfindungsgemäßen Kugelgelenks sind aus diesem Grund in der Wandung des dem Zapfen zugewandten Randbereichs der Lagerschale mehrere in Längsrichtung des Kugellagers verlaufende und einseitig begrenzte Schlitze vorgesehen, so dass sich die Lagerschale unter äußerem Druck ohne Zerstörung bzw. Rissbildung verformen und an den dem Zapfen zugewandten Bereich der Gelenkkugel anschmiegen kann.

Durch das Einbringen eines Schmierstoffs in das Innere des Kugelgelenks kann die Reibung zwischen der Lagerschale und der Gelenkkugel weiter herabgesetzt werden. Bevorzugt ist deshalb nicht nur ein Schmierstoff in das Kugelgelenk eingebracht, sondern es sind auch Schmiernuten oder Fetttaschen in der der Gelenkkugel zugewandten Fläche der Lagerschale vorgesehen, welche als Schmiermittelreservoir das Aufrechterhalten eines Schmierfilms zwischen der Gelenkkugel und der Lagerschale unterstützen.

Erfindungsgemäß ist die Lagerschale in zwei separate Teilschalen getrennt wobei eine erste der beiden Teilschalen zwischen dem der Gelenköffnung zugewandten Bereich der Gelenkkugel und dem Kugelgelenkgehäuse angeordnet ist, und die zweite Teilschale zwischen dem der Gelenköffnung abgewandten Bereich der Gelenkkugel und dem Kugelgelenkgehäuse angeordnet ist. Dabei ist unter dem der Gelenköffnung zugewandten Bereich der Gelenkkugel der Bereich zu verstehen, der zwischen der durch den senkrecht zur Längsachse des Kugelgelenks verlaufenden Großkreis auf der Gelenkkugel definierten Meridianebene und der Gelenköffnung liegt. Folglich liegt der der Gelenköffnung abgewandte Bereich der Gelenkkugel in dem durch die Meridianebene definierten und der Gelenköffnung abgewandten Halbraum.

Aufgrund der in der ersten Teilschale für den Zapfen vorgesehenen Zapfenöffnung ist die in axialer Richtung wirksame Lagerfläche der ersten Teilschale erheblich reduziert. Aus diesem Grund verursacht eine auf die Gelenkkugel wirkende axiale und auf den Zapfen zu gerichtete Kraft einen erheblich höheren Druck auf die erste Teilschale, als die betragsmäßig gleiche Kraft mit entgegengesetzter Orientierung auf die zweite Teilschale, welche eine größere wirksame Lagerfläche als die erste Teilschale aufweist. Daher ist bevorzugt die erste Teilschale aus dem mit einem reibmodifizierenden, anti-adhäsiven Material versetzten und mit Fasern verstärkten Kunststoff hergestellt.

Ist die erste Teilschale vollständig aus dem mit dem anti-adhäsiven Material versetzten und mit Fasern verstärkten Kunststoff hergestellt ist, so kann die erste Teilschale als kostengünstiges Spritzgussteil hergestellt werden, ohne ein aufwendiges Zwei-Komponenten-Verfahren anwenden zu müssen.

Die erste Teilschale kann dadurch montiert werden, dass der Kugelzapfen von der Lagerflächenseite der Lagerschale her mit seinem Zapfen durch die dafür in der ersten Teilschale vorgesehene Zapfenöffnung hindurchgeführt wird. Bevorzugt ist aber in der Wandung der ersten Teilschale ein in Längsrichtung des Kugelgelenks durchgehender Schlitz vorgesehen, so dass eine Montage des Kugelzapfens mit seiner Gelenkkugel durch die in der ersten Teilschale für den Zapfen vorgesehene Zapfenöffnung hindurch unter Aufweitung dieses Schlitzes möglich ist.

Die zweite Teilschale kann aus demselben Werkstoff wie die erste Teilschale hergestellt sein. Bevorzugt ist die zweite Teilschale aber aus einem duktileren und elastischeren Werkstoff als die erste Teilschale hergestellt, so dass auf die zweite Teilschale wirkende Stoßbelastungen gedämpft werden können. Diese Eigenschaft der zweiten Teilschale erhöht zum Beispiel bei einem im Fahrwerk angeordneten Kugelgelenk den Fahrkomfort. Wird das Kugelgelenk ferner unter Druck montiert, so dient die federelastische Eigenschaft der zweiten Teilschale zusätzlich dazu, die Gelenkkugel mit einer ausreichenden Vorspannung gegen die erste Teilschale vorzuspannen. Dadurch kann zum Beispiel einem durch Verschleiß der Teilschalen hervorgerufenen Klappern der Gelenkkugel entgegengewirkt werden.

Der oben angesprochene federelastische Effekt kann auch dadurch realisiert bzw. verbessert werden, indem ein Elastomerring zwischen der zweiten Teilschale und dem Kugelgelenkgehäuse unter Vorspannung angeordnet ist.

Als besonders geeignet hat sich POM (Polyoxymethylen) als Werkstoff für die zweite Teilschale herausgestellt, der die gewünschten duktileren und elastischeren Eigenschaften aufweist. Aus diesem Grund ist die zweite Teilschale bevorzugt aus POM hergestellt.

Falls die erste Teilschale mit der zweiten Teilschale nicht in Berührung steht, kann durch ein Verschwenken des Kugelzapfens aufgrund der Reibkräfte zwischen der Gelenkkugel und der ersten Teilschale diese in dem Kugelgelenkgehäuse bewegt werden. Dieses Verhalten ist unerwünscht und führt zu einem zusätzlichen Verschleiß, so dass nach einer bevorzugten Ausführungsform die erste Teilschale mit der zweiten Teilschale in Berührung steht. An der Berührungsstelle von erster und zweiter Teilschale stützen sich die beiden Teilschalen gegeneinander ab, so dass zumindest in dieser Hinsicht eine Bewegung der beiden Teilschalen aufeinander zu sicher verhindert ist. Eine besonders gute Sicherung der beiden Teilschalen gegen ein Verkippen wird dadurch erzielt, dass diese sich entlang ihrer beiden einander zugewandten Ränder vollständig oder zumindest an mehreren, rings des Umfangs der Gelenkkugel verteilt angeordneten Stellen berühren.

Häufig treten Fertigungstoleranzen bei der Herstellung von Kunststoffspritzteilen auf, die zu unerwünschten Eigenschaften des Kugelgelenks führen können. Aus diesem Grund ist der der zweiten Teilschale zugewandte Rand der ersten Teilschale konvex ausgebildet und der der ersten Teilschale zugewandte Rand der zweiten Teilschale konkav ausgebildet, so dass bei einer zu großen Ausbildung von einer der Teilschalen oder von beiden Teilschalen die relativ harte erste Teilschale mit ihrer konvexen Randfläche in die konkave Randfläche der relativ weichen zweiten Teilschale drückt, wodurch die erste Teilschale in den Randbereich der zweiten Teilschale eindringen kann. Bei diesem Vorgang wird die erste Teilschale so lange auf die zweite Teilschale unter Verdrängung von Material der zweiten Teilschale zugedrückt, bis ein toleranzfreier Sitz der beiden Teilschalen in dem Kugelgelenkgehäuse erreicht ist.

Die Erfindung wird anhand bevorzugter Ausführungsformen unter Bezugnahme auf die Zeichnung beschrieben. In der Zeichnung zeigen:
- Figur 1: eine Schnittansicht einer ersten Ausführungsform des erfindungsgemäßen Kugelgelenks mit einer in zwei Teilschalen geteilten Lagerschale,
- Figur 2: eine Schnittansicht eines Teils der zweigeteilten Lagerschale nach Figur 1 im Berührungsbereich der beiden Teilschalen,
- Figur 3: eine Schnittansicht einer ersten der beiden Teilschalen nach Figur 1,
- Figur 4: eine Draufsicht auf die erste Teilschale nach Figur 3,
- Figur 5: eine Schnittansicht einer ersten der beiden Teilschalen nach einer zweiten Ausführungsform des erfindungsgemäßen Kugelgelenks und
- Figur 6: eine Draufsicht auf die erste Teilschale nach Figur 5

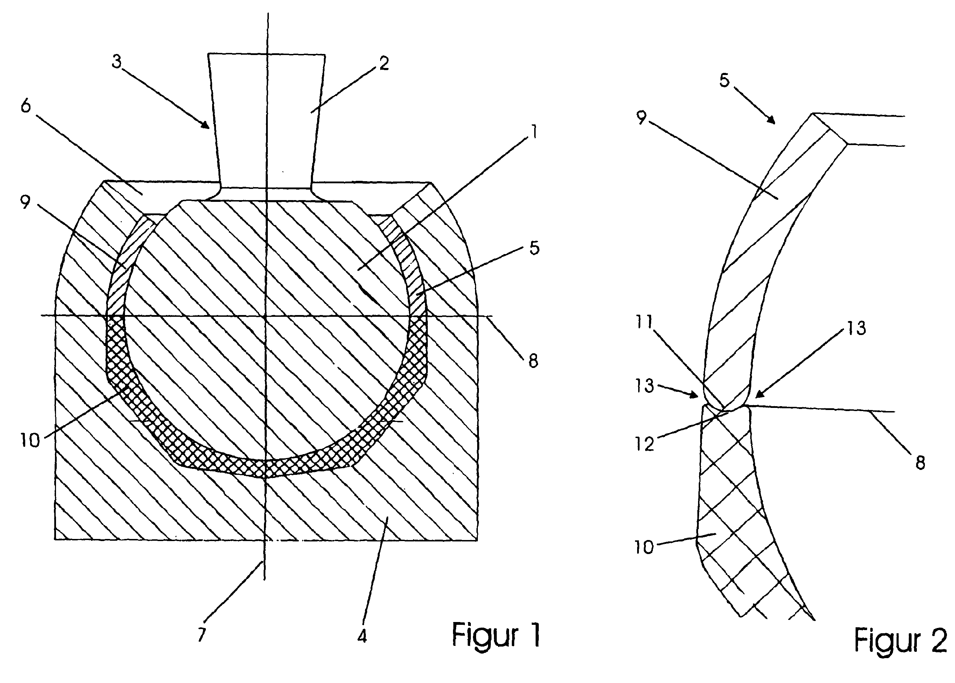

Aus Figur 1 ist eine erste Ausführungsform des erfindungsgemäßen Kugelgelenks ersichtlich, wobei ein mit einer Gelenkkugel 1 und mit einem Zapfen 2 versehener Kugelzapfen 3 mit seiner Gelenkkugel 1 in einer in einem Kugelgelenkgehäuse 4 angeordneten Lagerschale 5 drehbar und schwenkbar gelagert ist. Zwischen dem Kugelgelenkgehäuse 4 und dem Zapfen 2 kann ein Dichtungsbalg vorgesehen sein, der aus Gründen der Übersichtlichkeit hier nicht dargestellt ist. Entlang der senkrecht zur Längsachse 7 des Kugelgelenks verlaufenden Meridianebene 8 der Gelenkkugel 1 ist die Lagerschale 5 in eine erste Teilschale 9 und in eine zweite Teilschale 10 geteilt. Die erste Teilschale 9 ist ringförmig ausgebildet und aus mit PTFE versetzten und mit Glasfasern verstärkten Polyamid hergestellt. Um eine gute Festigkeit einerseits und eine gute Gleiteigenschaft andererseits zu erzielen, liegen der Fasergehalt im Polyamid zwischen 20% und 50% sowie der PTFE-Gehalt zwischen 5% und 20 %. Die erste Teilschale 9 neigt wegen ihrer hohen Festigkeit auch bei höheren Temperaturen von zum Beispiel 80 bis 120 °C nur zu einem geringen Kriechen des Materials.

Die zweite Teilschale 10 ist halbkugelschalenförmig ausgebildet und aus POM hergestellt, wobei die Werkstoffeigenschaften von POM der zweiten Teilschale 10 gute Federungs- und Dämpfungseigenschaften verleihen.

Aus Figur 2 ist eine geschnittene Teilansicht der Lagerschale 5 nach der ersten Ausführungsform in dem Bereich ersichtlich, wo die erste Teilschale 9 an der zweiten Teilschale 10 anliegt. Die erste Teilschale 9 ist an ihrem der zweiten Teilschale 10 zugewandten Rand 11 konvex ausgebildet und greift in den der ersten Teilschale 9 zugewandten und konkav ausgebildeten Rand 12 der zweiten Teilschale 10 ein. Im Berührungsbereich der beiden Teilschalen 9 und 10 ist an der Innenseite und an der Außenseite der Kugelschale 5 jeweils ein materialfreier Bereich 13 vorgesehen, in den Material der zweiten Teilschale 10 hineinfließen kann, wenn die erste Teilschale 9 mit ihrem konvexen Rand 11 gegen den konkaven Rand 12 der zweiten Teilschale 10 drückt.

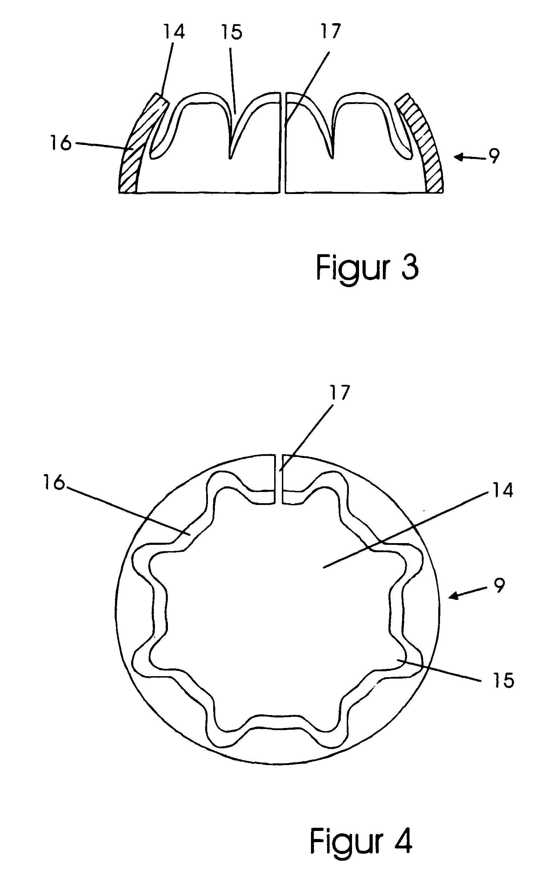

Aus Figur 3 ist eine Schnittansicht der ersten Teilschale 9 nach der ersten Ausführungsform ersichtlich, wobei rings der für den Zapfen 2 in der ersten Teilschale 9 vorgesehenen Zapfenöffnung 14 in der Wandung 16 des dem Zapfen 2 zugewandten Randbereichs mehrere in Längsrichtung des Kugelgelenks verlaufende und einseitig begrenzte Schlitze 15 vorgesehen sind, die hier v-förmig ausgebildet sind, aber auch eine andere Form aufweisen können. Die bereits hinsichtlich ihres Querschnitts gekrümmt ausgebildete erste Teilschale 9 liegt aufgrund von Herstellungstoleranzen nicht immer vollständig an der Oberfläche der Gelenkkugel 1 an. Durch das Vorsehen der Schlitze 15 kann nun der dem Zapfen 2 zugewandte Randbereich der ersten Teilschale 9 bei der Montage des Kugelgelenks an die Gelenkkugel 1 angedrückt werden, ohne eine Rissbildung oder Zerstörung der ersten Teilschale 9 hervorzurufen, denn die Schlitze 15 verleihen dem dem Zapfen zugewandten Randbereich der ersten Teilschale 9 eine höhere Elastizität, wobei das Andrücken des elastischen Bereiches bzw. der zwischen den Schlitzen 15 ausgebildeten Zungen der ersten Teilschale 9 an die Gelenkkugel 1 zum Beispiel über das Verschließen des Kugelgelenkgehäuses 4 erfolgen kann. Gemäß der Ausführungsform ist das Kugelgelenkgehäuse 4 durch Umbiegen seines die Gelenköffnung 6 umgebenden Randebereiches in Richtung auf die Längsachse des Kugelgelenks zu erfolgt.

Aus Figur 4 ist eine Draufsicht auf die erste Teilschale 9 nach der ersten Ausführungsform ersichtlich, wobei in der Wandung 16 der ersten Teilschale 9 ein in Längsrichtung des Kugelgelenks durchgehender Längsschlitz 17 vorgesehen ist. Obwohl der Durchmesser der Gelenkkugel 1 größer als der Durchmesser der Öffnung 14 ist, kann durch das Vorsehen des Längsschlitzes 17 die Gelenkkugel 1 unter Aufweitung desselben durch die Zapfenöffnung 14 hindurch gesteckt werden. Dadurch wird ein komfortables Einsetzen der Gelenkkugel 1 in die Lagerschale 5 bei der Montage des Kugelgelenks möglich.

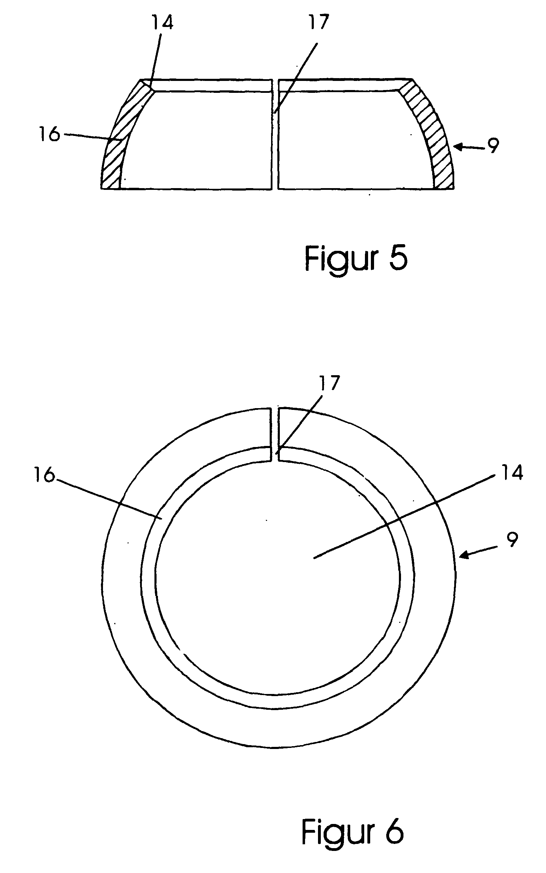

Aus Figur 5 ist eine Schnittansicht einer ersten Teilschale 9 nach einer zweiten Ausführungsform des erfindungsgemäßen Kugelgelenks ersichtlich, wobei diese erste Teilschale 9 in der gleichen Art und Weise wie die erste Teilschale nach der ersten Ausführungsform verwendet und eingesetzt werden kann. Für Merkmale der ersten Teilschale 9 nach der zweiten Ausführungsform, die identisch oder ähnlich zu Merkmalen der ersten Teilschale nach der ersten Ausführungsform sind, werden dieselben Bezugszeichen verwendet.

In der Wandung 16 der ebenfalls im Querschnitt gekrümmt ausbildeten Teilschale 9 nach der zweiten Ausführungsform sind im Gegensatz zu der ersten Teilschale nach der ersten Ausführungsform keine einseitig begrenzten Schlitze vorgesehen. Diese Schlitze können weggelassen werden, da die erste Teilschale mit einer ausreichenden Genauigkeit hergestellt werden kann und eine ausreichende Elastizität aufweist, um kleine Fertigungstoleranzen ohne Rissbildung oder Zerstörung ausgleichen zu können. Abgesehen von diesen Schlitzen und den dazwischen ausgebildeten Zungen ist der Aufbau der ersten Teilschale 9 nach der zweiten Ausführungsform aber identisch mit dem Aufbau der ersten Teilschale nach der ersten Ausführungsform.

Aus Figur 6 ist eine Draufsicht auf die erste Teilschale 9 nach der zweiten Ausführungsform ersichtlich, wobei in der Wandung 16 der ersten Teilschale 9 ein in Längsrichtung des Kugelgelenks durchgehender Längsschlitz 17 vorgesehen ist. Dieser Längsschlitz 17 hat die gleiche Funktion wie der Längsschlitz in der ersten Teilschale nach der ersten Ausführungsform.

### Bezugszeichenliste:

- 1: Gelenkkugel
- 2: Zapfen
- 3: Kugelzapfen
- 4: Kugelgelenkgehäuse
- 5: Lagerschale
- 6: Gelenköffnung
- 7: Längsachse des Kugelgelenks
- 8: Meridianebene
- 9: erste Teilschale
- 10: zweite Teilschale
- 11: konvex ausgebildeter Rand der ersten Teilschale
- 12: konkav ausgebildeter Rand der zweiten Teilschale
- 13: materialfreier Bereich
- 14: Zapfenöffnung in der ersten Teilschale
- 15: einseitig begrenzte, v-förmige Schlitze
- 16: Wandung der ersten Teilschale
- 17: durchgehender Längsschlitz

## Patentansprüche

1. Kugelgelenk für ein Kraftfahrzeug, insbesondere für das Fahrwerk des Kraftfahrzeugs, mit einem mit einer Gelenköffnung (6) versehenen Kugelgelenkgehäuse (4), einer in diesem angeordneten Lagerschale (5), einem aus einer Gelenkkugel (1) und einem Zapfen (2) bestehenden Kugelzapfen (3), welcher mit seiner Gelenkkugel (1) drehbar und schwenkbar in der Lagerschale (5) gelagert ist und mit seinem Zapfen (2) durch die Lagerschale (5) und die Gelenköffnung (6) hindurch aus dem Kugelgelenkgehäuse (4) herausragt, wobei die Lagerschale (5) zumindest teilweise aus einem mit einem anti-adhäsiven Material versetzten und mit Fasern verstärkten Kunststoff hergestellt ist, **dadurch gekennzeichnet, dass** die Lagerschale (5) in zwei separate Teilschalen (9, 10) getrennt ist, wobei
- eine erste (9) der beiden Teilschalen (9, 10) zwischen dem der Gelenköffnung (6) zugewandten Bereich der Gelenkkugel (1) und dem Kugelgelenkgehäuse (4) angeordnet ist und
- die zweite Teilschale (10) zwischen dem der Gelenköffnung (6) abgewandten Bereich der Gelenkkugel (1) und dem Kugelgelenkgehäuse (4) angeordnet ist.

2. Kugelgelenk nach Anspruch 1, **dadurch gekennzeichnet, dass** das anti-adhäsive Material Polytetraflourethylen ist.

3. Kugelgelenk nach Anspruch 1 oder 2, **dadurch gekennzeichnet, dass** der Kunststoff Polyamid ist.

4. Kugelgelenk nach einem der Ansprüche 1 bis 3, **dadurch gekennzeichnet, dass** die Fasern Glasfasern sind.

5. Kugelgelenk nach einem der Ansprüche 1 bis 4, **dadurch gekennzeichnet, dass** in der Wandung (16) des dem Zapfen (2) zugewandten Randbereichs der Lagerschale (5) mehrere in Längsrichtung (7) des Kugelgelenks verlaufende und einseitig begrenzte Schlitze (15) vorgesehen sind.

6. Kugelgelenk nach einem der Ansprüche 1 bis 5, **dadurch gekennzeichnet, dass** ein Schmierstoff in das Kugelgelenk eingebracht ist und Schmiemuten oder Fettaschen in der der Gelenkkugel (1) zugewandten Fläche der Lagerschale (5) vorgesehen sind.

7. Kugelgelenk nach Anspruch 1, **dadurch gekennzeichnet, dass** die erste Teilschale (9) aus dem mit dem anti-adhäsiven Material versetzten und mit Fasern verstärkten Kunststoff hergestellt ist.

8. Kugelgelenk nach Anspruch 1 oder 7, **dadurch gekennzeichnet, dass** in der Wandung (16) der ersten Teilschale (9) ein in Längsrichtung (7) des Kugelgelenks durchgehender Schlitz (17) vorgesehen ist.

9. Kugelgelenk nach Anspruch 1, 7 oder 8, **dadurch gekennzeichnet, dass** die zweite Teilschale (10) aus einem duktileren und elastischeren Werkstoff als die erste Teilschale hergestellt ist.

10. Kugelgelenk nach Anspruch 1, 7, 8 oder 9, **dadurch gekennzeichnet, dass** die zweite Teilschale (10) aus Polyoxymethylen hergestellt ist.

11. Kugelgelenk nach Anspruch 1, 7, 8, 9 oder 10, **dadurch gekennzeichnet, dass** die erste Teilschale (9) mit der zweiten Teilschale (10) rings der Gelenkkugel (1) in Berührung steht.

12. Kugelgelenk nach Anspruch 1, 7, 8, 9, 10 oder 11, **dadurch gekennzeichnet, dass** der der zweiten Teilschale (10) zugewandte Rand (11) der ersten Teilschale (9) konvex ausgebildet ist und der der ersten Teilschale (9) zugewandte Rand (12) der zweiten Teilschale (10) konkav ausgebildet ist.

## Claims

1. Ball-and-socket joint for a motor vehicle, in particular for the chassis of the motor vehicle, with a ball-and-socket joint housing (4) which is provided with a joint opening (6), a bearing shell (5) disposed in the housing and a ball pin (3) which consists of a joint ball (1) and a pin (2), is mounted so as to be rotatable and pivotable in the bearing shell (5) by way of its joint ball (1) and projects through the bearing shell (5) and the joint opening (6) out of the ball-and-socket joint housing (4) by way of its pin (2), wherein the bearing shell (5) is made at least in part of a fibre-reinforced plastics material which is mixed with an anti-adhesive material, **characterised in that** the bearing shell (5) is split into two separate partial shells (9, 10),
wherein
- a first (9) of the two partial shells (9, 10) is disposed between the region of the joint ball (1) which faces the joint opening (6) and the ball-and-socket joint housing (4) and
- the second partial shell (10) is disposed between the region of the joint ball (1) which is remote from the joint opening (6) and the ball-and-socket joint housing (4).

2. Ball-and-socket joint according to Claim 1, **characterised in that** the anti-adhesive material is polytetrafluoroethylene.

3. Ball-and-socket joint according to Claim 1 or 2, **characterised in that** the plastics material is polyamide.

4. Ball-and-socket joint according to any one of Claims 1 to 3, **characterised in that** the fibres are glass fibres.

5. Ball-and-socket joint according to any one of Claims 1 to 4, **characterised in that** a plurality of slots (15) which extend in the longitudinal direction (7) of the ball-and-socket joint and are bounded on one side are provided in the wall (16) of the edge region of the bearing shell (5) which faces the pin (2).

6. Ball-and-socket joint according to any one of Claims 1 to 5, **characterised in that** a lubricant is introduced into the ball-and-socket joint, and lubrication grooves or grease pockets are provided in the face of the bearing shell (5) which faces the joint ball (1).

7. Ball-and-socket joint according to Claim 1, **characterised in that** the first partial shell (9) is made of the fibre-reinforced plastics material which is mixed with the anti-adhesive material.

8. Ball-and-socket joint according to Claim 1 or 7, **characterised in that** a slot (17) passing through in the longitudinal direction (7) of the ball-and-socket joint is provided in the wall (16) of the first partial shell (9).

9. Ball-and-socket joint according to Claim 1, 7 or 8, **characterised in that** the second partial shell (10) is made of a more ductile and elastic material than the first partial shell.

10. Ball-and-socket joint according to Claim 1, 7, 8 or 9, **characterised in that** the second partial shell (10) is made of polyoxymethylene.

11. Ball-and-socket joint according to Claim 1, 7, 8, 9 or 10, **characterised in that** the first partial shell (9) is in contact with the second partial shell (10) around the joint ball (1).

12. Ball-and-socket joint according to Claim 1, 7, 8, 9, 10 or 11, **characterised in that** the edge (11) of the first partial shell (9) which faces the second partial shell (10) is convex and the edge (12) of the second partial shell (10) which faces the first partial shell (9) is concave.

## Revendications

1. Joint sphérique pour véhicule automobile, en particulier pour le châssis d'un véhicule automobile, comportant un boîtier de joint sphérique (4) pourvu d'une ouverture de joint (6), une coquille de coussinet (5) disposée dans celui-ci, un pivot à rotule (3) constitué d'une rotule d'articulation (1) et d'un pivot (2), lequel est monté tournant et pivotant dans la coquille de coussinet (5), par sa rotule d'articulation (1), et dépasse du boîtier de joint sphérique (4) par son pivot (2) à travers la coquille de coussinet (5) et l'ouverture de joint (6), la coquille de coussinet (5) étant fabriquée au moins en partie dans une matière plastique chargée d'un matériau anti-adhésif et renforcé avec des fibres, **caractérisé en ce que** la coquille de coussinet (5) est divisée en deux coquilles partielles (9, 10) séparées,
- une première (9) des deux coquilles partielles (9, 10) étant disposée entre la zone, tournée vers l'ouverture de joint (6), de la rotule d'articulation (1) et le boîtier de joint sphérique (4), et
- la seconde coquille partielle (10) étant disposée entre la zone, tournée à l'opposé de l'ouverture de joint (6), de la rotule d'articulation (1) et le boîtier de joint sphérique (4).

2. Joint sphérique selon la revendication 1, **caractérisé en ce que** le matériau anti-adhésif est du polytétrafluoréthylène.

3. Joint sphérique selon la revendication 1 ou 2, **caractérisé en ce que** la matière plastique est une polyamide.

4. Joint sphérique selon l'une des revendications 1 à 3, **caractérisé en ce que** les fibres sont des fibres de verre.

5. Joint sphérique selon l'une des revendications 1 à 4, **caractérisé en ce que** dans la paroi (16) de la zone de bordure, tournée vers le pivot (2), de la coquille de coussinet (5), sont prévues plusieurs fentes (15) s'étendant dans la direction longitudinale (7) du joint sphérique et limitées d'un côté.

6. Joint sphérique selon l'une des revendications 1 à 5, **caractérisé en ce qu'**un lubrifiant est introduit dans le joint sphérique et des nervures de lubrification ou poches à graisse sont prévues dans la surface, tournée vers la rotule d'articulation (1), de la coquille de coussinet (5).

7. Joint sphérique selon la revendication 1, **caractérisé en ce que** la première coquille partielle (9) est fabriquée dans la matière plastique chargée du matériau anti-adhésif et renforcée avec des fibres.

8. Joint sphérique selon la revendication 1 ou 7, **caractérisé en ce que** dans la paroi (16) de la première coquille partielle (9) est prévue une fente (17) continue dans la direction longitudinale (7) du joint sphérique.

9. Joint sphérique selon la revendication 1, 7 ou 8, **caractérisé en ce que** la seconde coquille partielle (10) est fabriquée dans un matériau plus ductile et plus élastique que la première coquille partielle.

10. Joint sphérique selon la revendication 1 à 7, 8 ou 9, **caractérisé en ce que** la seconde coquille partielle (10) est fabriquée en polyoxyméthylène.

11. Joint sphérique selon la revendication 1, 7, 8, 9 ou 10, **caractérisé en ce que** la première coquille partielle (9) est en contact avec la seconde coquille partielle (10) autour de la rotule d'articulation (1).

12. Joint sphérique selon la revendication 1, 7, 8, 9, 10 ou 11, **caractérisé en ce que** le bord (11), tourné vers la seconde coquille partielle (10), de la première coquille partielle (9), est réalisé convexe, et le bord (12), tourné vers la première coquille partielle (9), de la seconde coquille partielle (10), est réalisé concave.
